# EUROPÄISCHE PATENTSCHRIFT

(11) **EP 0 922 776 B1**
(45) Veröffentlichungstag und Bekanntmachung des Hinweises auf die Patenterteilung: **16.07.2003**
(21) Anmeldenummer: 98120942.2
(22) Anmeldetag: 04.11.1998
(51) Int. Cl.: C21C 7/00, C21C 1/02, B65G 53/12, B65G 53/66, C21C 7/064

(54) **Verfahren und Anlage zum Einblasen wenigstens eines Zusatzstoffes in eine Metallschmelze**
Process and apparatus for the injection of at least one additive to a molten metal
Procédé et installation d'injection d'au moins un additif au métal en fusion

(30) Priorität: 12.12.1997 DE 19755393
(43) Veröffentlichungstag der Anmeldung: 16.06.1999
(73) Patentinhaber: POLYSIUS Aktiengesellschaft, 59269 Beckum (DE)
(72) Erfinder: Oskamp, Alfons, 59227 Ahlen (DE)
(74) Vertreter: Tetzner, Volkmar, Dr.-Ing. Dr. jur.

(56) Entgegenhaltungen:
- EP-A- 0 490 174
- GB-A- 970 990
- US-A- 2 692 196
- US-A- 3 756 434
- US-A- 4 277 279
- US-A- 5 494 381
- JACOB G.,SONDAG Y.,OSKAMP A.: "New hot metal desulpherisation plant at Unimétal Gandrange : first results" IRONMAKING AND STEELMAKING, Bd. 19, Nr. 4, 1992, Seiten 302-305, XP002093156

## Beschreibung

Die Erfindung betrifft eine Anlage (entsprechend dem Oberbegriff des Anspruches 1) zum pneumatischen Einblasen von relativ kleinen Mengen wenigstens eines im wesentlichen trockenen und pulverförmigen Zusatzstoffes in eine Metallschmelze.

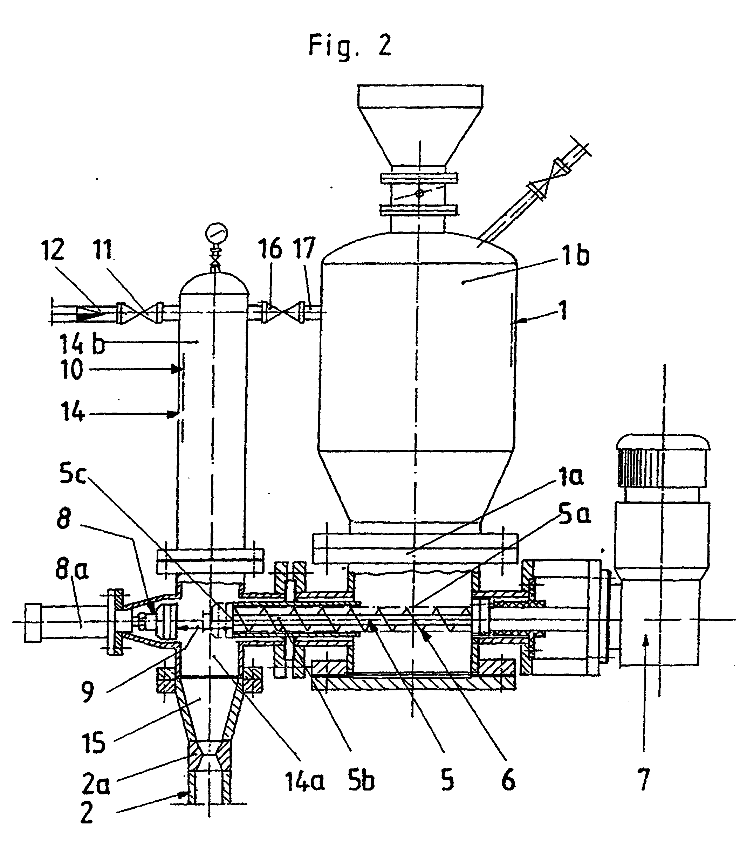

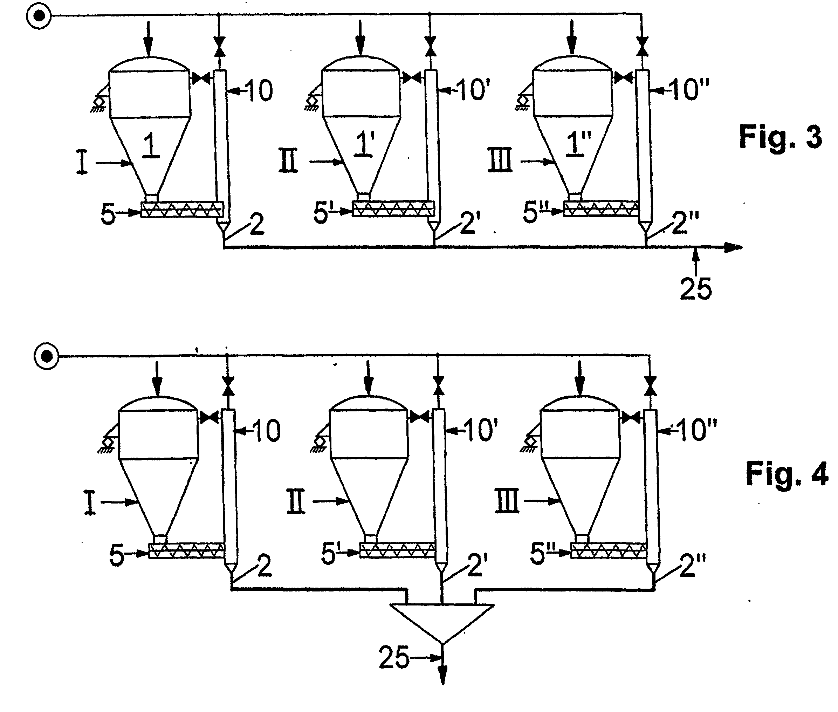

Zur Behandlung von Metallschmelzen, beispielsweise zum Entschwefeln von Roheisen- und Stahlschmelzen, ist es bekannt, die Hauptmenge des Behandlungsmittels, also beispielsweise das Hauptentschwefelungsmittel, mit Hilfe einer wenigstens ein Druckgefäß, wenigstens eine pneumatische Förderrohrleitung und wenigstens eine Einblaslanze enthaltenden Anlage in die Metallschmelze einzublasen. Ein Verfahren und eine Anlage dieser Art sind beispielsweise in "Ironmaking and Steelmaking", 1992, Vol.19, No.4, S.302 und 303 (anhand der Fig.2 und 3), beschrieben.

Bei diesen bekannten Verfahren und Anlagen sind die erwähnten Druckgefäße mit zahlreichen Regel- und Meßeinrichtungen ausgerüstet, wie z.B. mit einer Oberdruckregelung, einer Differenzdruckregelung, einer Transportgasregelung, einer Austragsregelimg, einer Druckdifferenzregelung und dergleichen, wobei außerdem der untere, meist trichterförmige Teil des Druckgefäßes mit einer pneumatischen Auflockerungseinrichtung zum Auflockern bzw. Fluidisieren des im wesentlichen pulverförmigen Behandlungsmittels versehen ist. Am unteren Ende dieses trichterförmigen Druckgefäßteiles ist ein steuerbares Auslaufventil vorgesehen, das über eine Düse bzw. ein Auslaufregelventil in die zugehörige pneumatische Förderrohrleitung einmündet. Diese bekannten Verfahren und Anlagen zum pneumatischen Transport und Einblasen von pulverförmigen Behandlungsmitteln, insbesondere von Entschwefelungsmitteln in eine Metallschmelze haben sich bei verhältnismäßig großen Fördermengen bewehrt.

Neben den größeren Mengen an Hauptbehandlungsmittel bzw. Hauptentschwefelungsmittel ist es verfahrenstechnisch von Vorteil, wenn noch wenigstens ein Zusatzstoff, d.h. entsprechende Reagenzien oder Additive in eine Metallschmelze eingeblasen werden können, und zwar meist zusätzlich zu der genannten Hauptmenge, Bei diesen Zusatzstoffen handelt es sich jedoch um relativ kleine und mitunter sehr kleine Mengen, die vielfach in Größenordnungen von etwa 1 kg/min und weniger einzublasen sind. Derart geringe Einblasmengen lassen sich mit den oben beschriebenen und nach Art von sogenannten Druckgefäßförderern arbeitenden Anlagen und Verfahren überhaupt nicht oder nur sehr unzuverlässig fördern, was u.a. auf die notwendige, sehr kleine Düsenaustragsöffnung am Druckgefäß und den notwendigen Druck im Druckgefäß selbst zurückzuführen ist, der wiederum von der Förderleitung und der Eintauchtiefe der Einblaslanze in die Schmelze abhängig ist.

In der Praxis ist man bisher meist so vorgegangen, dass man die notwendigen Zusatzstoffe der Hauptkomponente des Behandlungsmittels vorher beigemischt hat. Die Gesamtmischung aus Hauptkomponente und Zusatzstoffen) wurde dann in der oben beschriebenen Weise in die Metallschmelze eingeblasen. Diese Verfahrensweise hat sich jedoch aus verschiedenen Gründen als ungunstig erwiesen. So ist es bei diesen bekannten Ausführungen nicht möglich, Zusatzstoffe vor, während oder auch nach der Hauptschmelzebehandlung, z.B. Hauptentschwefelung, mit unterschiedlichen und regelbaren Fördermengen in die Metallschmelze einzubringen. Diese bekannten Verfahren und Anlagen sind somit auch äußerst unflexibel bei einer kurzfristigen Änderung eines Zusatzstoffes, da eine Gesamtmischung von in eine Metallschmelze einzubringendem Behandlungsmittel aus Hauptkomponente und Zusatzstoff insgesamt rechtzeitig vor dem Einblasen ausreichend vermischt werden muss.

Aus der GB-A 970 990 ist eine Anlage zum pneumatischen Einblasen wenigstens eines im wesentlichen trockenen und pulverförmigen Zusatzstoffes in eine Metallschmelze bekannt. Der Zusatzstoff wird pneumatisch über eine durch eine Scheibe einstellbare Öffnung ausgetragen.

Die US-A 2 692 196 betrifft eine Anlage zur Behandlung einer Metallschmelze, bei der ein Zusatzstoff mittels einer Förderschnecke aus einem Vorratsbehälter ausgetragen und über eine Lanze der Schmelze zugeführt wird. Der Zusatzstoff fällt aufgrund der Schwerkraft in die Schmelze. Die Lanze kann erforderlichenfalls mit einem Gas beaufschlagt werden, um ein Hochsteigen der Schmelze in der Lanze zu verhindern.

Der Erfindung liegt daher die Aufgabe zugrunde, eine Anlage gemäß dem Oberbegriff des Anspruches 1 so auszubilden, dass bei relativ einfachem Aufbau der Anlage ein sehr zuverlässiges und genau dosierbares pneumatisches Fördern und Einblasen von relativ kleinen Mengen wenigstens eines Zusatzstoffes in eine Metallschmelze gewährleistet werden kann.

Diese Aufgabe wird erfindungsgemäß durch die Merkmale des Anspruches 1 gelöst.

Vorteilhafte Ausgestaltungen und Weiterbildungen der Erfindung sind Gegenstand der Unteransprüche.

Bei der erfindungsgemäßen Anlage wird zunächst der den Zusatzstoff enthaltende Druckbehälter und die Förderrohrleitung aus derselben Druckgasquelle gleichzeitig mit Druck beaufschlagt. Hierdurch wird nach relativ kurzer Zeit ein Leerwiderstand in der Förderrohrleitung erreicht. Daraufhin wird der Zusatzstoff mechanisch aus dem Druckbehälter ausgetragen und bei einstellbarer Feindosierung - ebenfalls entsprechend mechanisch - in das Gutzuführende der Förderrohrleitung eingespeist, wobei während des Förderbetriebes zwischen dem Druckbehälter und dem Gutzuführende der Fördenohrleitung ein konstanter Differenzdruck aufrechterhalten und die Förderleistung in der Förderrohrleitung ausschließlich über die mechanische Austragung und Dosierung aus dem Druckbehälter geregelt wird.

Bei dieser Anlage wird somit gewissermaßen ein automatischer Druckausgleich zwischen Druckbehälter und Förderrohrleitung bzw. dem Gutzuführende dieser Förderrohrleitung hergestellt. Durch diese Maßnahmen baut sich dann in Abhängigkeit von der zugeführten Druckgasmenge, der Länge der Förderrohrleitung, dem Querschnitt dieser Förderrohrleitung sowie der Ausführung und Eintauchtiefe einer entsprechenden Einblaslanze in die Metallschmelze automatisch der erforderliche Förderdruck auf. Da der Druckbehälter - über ein entsprechendes mechanisches Austrags- und Dosierorgan - direkt mit dem Gutzuführende der Förderrohrleitung verbunden ist, passt sich der Gasdruck im Druckbehälter und in der Förderrohrleitung kontinuierlich den jeweiligen Betriebszuständen an, d.h. der Gasdruck im Druckbehälter wird ausschließlich von der erforderlichen Transportgas- bzw. Druckgasmenge, der Rohrleitungsführung, dem Querschnitt sowie dem Gegendruck in einem die Metallschmelze enthaltenden Behälter bestimmt. Leistungsabhängige Druckregeleinrichtungen mit Auslaufregelventil, Bodenbelüftungseinrichtungen und dergleichen können erfindungsgemäß entfallen, was zu einem besonders einfachen Aufbau der entsprechenden Anlage führt.

Von besonderem Vorteil ist bei dieser Anlage ferner, dass die Art und Weise wie der Zusatzstoff mechanisch aus dem Druckbehälter ausgetragen und bei einstellbarer Feindosierung in die Förderrohrleitung eingespeist wird, gewährleistet, dass alle gängigen im wesentlichen trockenen und pulverförmigen Zusatzstoffe selbst in relativ kleinsten Mengen und Einblasraten (beispielswiese < 1 kg/min) genau dosiert und zuverlässig zu dem jeweils gewünschten Zeitpunkt in die entsprechende Metallschmelze eingeblasen werden können.

Gemäß einem weiteren Merkmal ist es sinnvoll, wenn der Differenzdruck zwischen Druckbehälter und Gutzuführende der Förderrohrleitung ausschließlich über die Druckgaszufuhr von der Druckgasquelle geregelt wird. Dies führt zu einer relativ einfachen regeltechnischen Ausführung.

In dem Druckbehälter und in der Förderleitung wird zweckmäßig ein Überdruck eingestellt, d.h. die entsprechende Anlage arbeitet im Überdruckbereich. Hierbei stellt sich im oberen Teil des Druckbehälters aufgrund der automatischen Druckgasregelung und -verteilung der notwendige Überdruck ein, ohne dass eine aufwendige Oberdruckregelung - wie bei bekannten Druckgefäßförderanlagen - erforderlich ist.

Ein besonderer Vorteil ergibt sich bei der Entschwefelung von Roheisen- und Stahlschmelzen, wobei relativ große Mengen wenigstens eines Hauptentschwefelungsmittels unter Verwendung eines gesonderten Häuptdruckbehälters und einer Hauptförderrohrleitung und der wenigstens eine Zusatzstoff in Form von entsprechenden Reagenzien und/oder Additiven gesondert oder durch Koinjektion in die Schmelze eingeblasen werden. Hierdurch ergibt sich also eine besonders vorteilhafte Kombination des erfindungsgemäßen Verfahrens bzw. der entsprechenden Anlage mit einer vorhandenen oder neu zu installierenden Anlage für das Hauptentschwefelungsmittel.

In diesem Sinne kann es somit besonders sinnvoll sein, wenn wenigstens zwei unterschiedliche Zusatzstoffe unabhängig voneinander aus gesonderten Druckbehältern (mit jeweils zugehörigen Förderrohrleitungen) in die Metallschmelze eingeblasen werden.

Es wird im allgemeinen besonders bevorzugt, den bzw. jeden Zusatzstoff diskontinuierlich in die Metallschmelze einzublasen, obwohl generell auch die Möglichkeit besteht, den Zusatzstoff kontinuierlich zu fördern und einzublasen.

Die Erfindung sei nachfolgend anhand einiger Anlagenbeispiele näher beschrieben. In dieser Zeichnung zeigen
Fig.1 eine Schemadarstellung einer erfindungsgemäßen Anlage;
Fig.2 eine teilweise geschnittene Ansicht (im Vertikalschnitt) einer Baueinheit mit Druckbehälter, Dosierschnecke, Druckgasverteiler und Gutzufuhrende der Fördenrohrleitung der Anlage; Druckbehälter, Dosierschnecke, Druckgasverteiler und Gutzuführende der Förderrohrleitung der Anlage;
Fig.3 und 4 stark vereinfachte Schemadarstellungen von zwei weiteren Ausführungsbeispielen der erfindungsgemäßen Anlage mit mehreren Druckbehältern und Förderrohrleitungen.

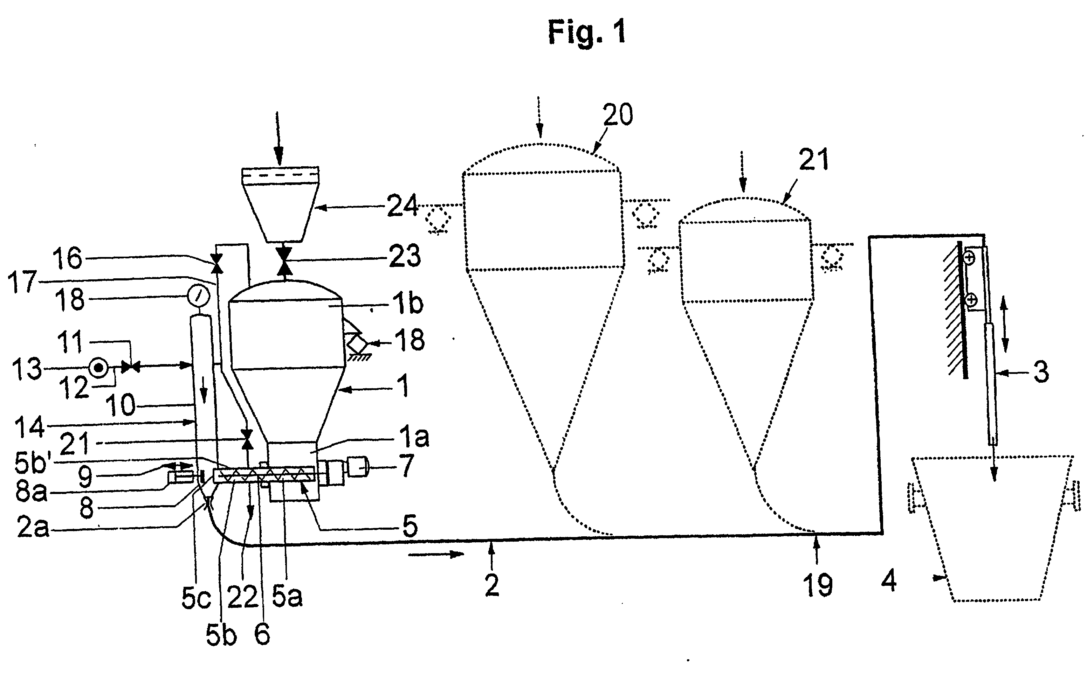

Die in Fig.1 veranschaulichte Gesamtanlage ist insbesondere so ausgeführt, daß das zuvor beschriebene erfindungsgemäße Verfahren damit durchgeführt werden kann. Diese erfindungsgemäße Anlage dient dementsprechend zum pneumatischen Fördern und Einblasen eines im wesentlichen trockenen und pulverförmigen Zusatzstoffes. in eine Metallschmelze, wobei unter pulverförmig auch relativ feinkörnige Materialien zu verstehen sind. Bei dem nachfolgend anhand Fig.1 beschriebenen ersten Ausführungsbeispiel der Anlage sei angenommen, daß nur ein Zusatzstoff, d.h. ein ausgewählter Zusatzstoff aus verschiedenen möglichen Reagenzien und Additiven gefördert und in die Metallschmelze eingeblasen werden soll.

Gemäß Fig.1 enthält dementsprechend die Anlage ganz allgemein einen mit Druckgas beaufschlagbaren Druckbehälter 1 zur Aufnahme und Abgabe des entsprechenden Zusatzstoffes sowie eine Förderrohrleitung 2 zum pneumatischen Transport des Zusatzstoffes zu wenigstens einer Einblaslanze 3, die an bzw. über einem nur gestrichelt angedeuteten Behälter 4 in üblicher weise auf- und abbewegbar angeordnet ist, der die zu behandelnde Metallschmelze enthält und bei dem es sich beispielsweise um eine Roheisenpfanne handeln kann. Es sei bereits an dieser Stelle gesagt, daß diese erfindungsgemäße Anlage zum pneumatischen Fördern und Einblasen von Zusatzstoff Teil einer größeren Gesamtanlage sein kann, bei der es sich um eine ansonsten übliche Entschwefelungsanlage für eine Roheisenschmelze handeln soll. In etwa gleichartiger Weise können selbstverständlich auch andere Metallschmelzen, insbesondere Stahlschmelzen mit entsprechenden Zusatz- und Hauptstoffen behandelt bzw. entschwefelt werden. Die nachfolgend anhand Fig.1 näher beschriebene erfindungsgemäße Anlage ist - wie angedeutet - vorzugsweise zum Fördern und Einblasen relativ kleiner Zusatzstoffmengen, beispielsweise auch sehr kleinen Einblasraten von ≤ 1 kg/min. vorgesehen; grundsätzlich kann die erfindungsgemäße Anlage aber auch zum Fördern und Einblasen größerer Einblasraten als der zuvor angegebenen benutzt werden. Mit diesen geringen Einblasraten kann ein entsprechendes Reagenz bzw. Additiv vor, während und nach einer Primär- bzw. Hauptbehandlung, d.h. im vorliegenden Falle einer Primär- bzw. Hauptentschwefelung, eingeblasen werden.

Um die zuvor genannten geringen Einblasraten ermöglichen zu können, ist bei der erfindungsgemäßen Anlage der Bereich vom Druckbehälter 1 bis zum Gutzuführende 2a der Förderrohrleitung 2.hinsichtlich des Gutaustrags und der Gutdosierung zur Feineinspeisung des Fördergutes (Zusatzstoff) besonders ausgebildet, wie nachfolgend einerseits anhand Fig.1, andererseits aber besonders anhand Fig.2 näher erläutert wird.

Am unteren Teil 1a des Druckbehälters 1 ist generell ein regelbares, kombiniertes mechanisches Austrags- und Dosierorgan angeordnet, das in diesem bevorzugten Ausführungsbeispiel durch eine Dosierförderschnecke bzw. Dosierschnecke 5 gebildet wird, die ein entsprechendes Schneckenförderelement 6 aufweist. Diese Dosierschnecke 5 besitzt einen inneren ersten Förderabschnitt 5a, der in den unteren Druckbehälterteil 1a hineinragt und diesen weitgehend diametral durchsetzt, sowie einen äußeren zweiten Förderabschnitt 5b, mit dem die Dosierschnecke 5 über dem Gutzuführende 2a der Förderrohrleitung 2 im wesentlichen frei ausmündet. Im Bereich des inneren ersten Förderabschnittes 5a der Dosierschnecke 5 durchsetzt das Schneckenförderelement 6 den inneren Querschnitt des unteren Druckbehälterteiles 1a im wesentlichen frei, d.h. es ist von keinem Gehäuseteil oder dergleichen umgeben. Dieses Schneckenförderelement 6 wird durch eine an der Außenseite des unteren Druckbehälterteiles 1a angeordnete Antriebseinrichtung 7 so angetrieben, daß es in der Drehzahl regelbar ist, wodurch die Austrags- und Dosierleistung dieser Dosierschnecke 5 in weiten Grenzen einstellbar ist und bei Abschalten der Antriebseinrichtung 7 gestoppt werden kann.

Durch diese Verwendung und Anordnung der Dosierschnecke 5 am und im unteren Teil 1a des Druckbehälters 1 kann der im Druckbehälter 1 enthaltene Zusatzstoff auf sehr zuverlässige und doch einfache Weise mechanisch aus diesem Druckbehälter 1 ausgetragen, herausgefördert und bei einstellbarer Feindosierung in das Gutzuführende 2a der Förderrohrleitung 2 eingespeist werden.

Dem Mündungsende 5c am äußeren zweiten Förderabschnitt 5b der Dosierschnecke 5 ist zweckmäßig ein schlagartig wirkendes Absperrventil 8 zugeordnet, das nur zum Absperren eines eventuellen Gutnachlaufes (aber nicht zum Dosieren des Fördergutes) des Mündungsendes 5c und damit der Dosierschnecke 5 bestimmt ist. Dieses Absperrventil 8 kann - wie in der Zeichnung angedeutet - durch einen geeigneten Hubantrieb 8a oder dergleichen axial zum genannten Mündungsende 5c in Richtung des Doppelpfeiles 9 geöffnet oder geschlossen werden.

Ein anderer wichtiger Bauteil im Bereich zwischen Druckbehälter 1 und Förderrohrleitung 2 ist ein Druckgasverteiler 10, der über eine mit einem Durchflußregelventil 11 versehene Druckgas-Zuführleitung 12 mit einer Druckgasquelle 13 verbunden ist, durch die ein geeignetes Druckgas bzw. Transportgas (z.B. Druckluft, Stickstoffgas, Argon oder dergleichen) der Anlage zugeführt wird. Dieser Druckgasverteiler 10 weist ein etwa vertikal ausgerichtetes Verteilergehäuse 14 auf, an dessen unteres Ende 14a einerseits über ein etwa trichterförmiges Übergangsstück 15 das Gutzuführende 2a der Förderrohrleitung 2 und andererseits der mit dem Mündungsende 5c versehene äußere zweite Förderabschnitt 5b der Dosierschnecke 5 angeschlossen ist. Der obere Teil 14b dieses Verteilergehäuses 14 steht dagegen einerseits über die erwähnte Druckgas-Zuführleitung 12 mit der Druckgasquelle 13 und andererseits über eine mit einem Absperrventil 16 versehene Druckgas-Versorgungsleitung 17 mit dem oberen.Teil 1b des Druckbehälters 1 in Verbindung. Durch diese Druckgas-Versorgungsleitung 17 wird im oberen Teil 1b des Druckbehälters 1 der für die Förderung notwendige Überdruck automatisch eingestellt, ohne daß dazu - wie bereits weiter oben im Zusammenhang mit dem Verfahren erläutert - ein geregelter Oberdruck aufgebaut werden muß, wie er bei bekannten Druckgefäßförderanlagen erforderlich ist.

Durch die geschilderte Ausbildung und Zusammenordnung des Druckgasverteilers 10 mit dem Druckbehälter 1, dessen Dosierschnecke 5 und der Förderrohrleitung 2 bzw. dessen Gutzuführende 2a wird gewissermaßen eine besondere Baueinheit für die erfindungsgemäße Anlage geschaffen. In dieser Baueinheit ist somit der Druckgasverteiler 10 für eine gemeinsame, gleichzeitige Druckgaszuführung mit dem Druckbehälter 1 und der Förderrohrleitung 2 bzw. dessen Gutzuführende 2a derart verbunden, daß im Förderbetrieb zwischen diesem Druckbehälter 1 und dem Gutzuführende 2a ein konstanter Differenzdruck hergestellt und aufrechterhalten wird, wobei dieser Differenzdruck etwa Null betragen soll, damit kein Material unbeabsichtigt gefördert wird. Auf diese Weise wird der Gasdruck im Druckbehälter 1 ausschließlich von der erforderlichen Transportgas- bzw. Druckgasmenge, der Führung und dem Querschnitt der Förderrohrleitung 2 sowie dem Gegendruck im Behälter 4 bzw. in der Roheisenschmelze bestimmt. Eine leistungsabhängige Druckregelung mit einem Auslaufregelventil und Belüftungseinrichtungen, wie bei bekannten Druckgefäßförderanlagen, ist hier nicht erforderlich. Die Förderleistung wird hierbei unabhängig vom Druckniveau in diesem System ausschließlich über die Drehzahl der Dosierschnecke 5 bzw. deren Schneckenförderelement 6 geregelt. Durch den immer gleichbleibenden Differenzdruck im Druckbehälter 1 und am Mündungsende 5c bzw. Gutzuführende 2a der Förderrohrleitung 2 ist gewährleistet, daß die Förderleistung in allen Druckbereichen, z.B. von 0 - 10 bar, proportional der Schneckendrehzahl ist.

Bei der zuvor geschilderten Baueinheit sei noch erwähnt, daß es zweckmäßig ist, den äußeren zweiten Förderabschnitt 5b der Dosierschnecke 5 mit einem Schnekkengehäuse 5b' in Form eines geschlossenen Rohres zu versehen, wodurch der Druckbehälter 1 druckdicht mit dem Druckgasverteiler 10 bzw. des Verteilergehäuse 14 verbunden wird.

Bei dieser erfindungsgemäßen Förder- und Einblasanlage wird es ferner für vorteilhaft angesehen, wenn der bzw. jeder Druckbehälter 1 in an sich bekannter Weise auf einer Wägeeinrichtung angeordnet ist, wie sie bei 18 angedeutet ist. Hierdurch kann eine sehr genaue gravimetrische Steuerung der Zusatzstoffabgabe aus dem Druckbehälter 1 und in die Förderrohrleitung 2 geschaffen werden. Diese Steuerung kann beispielsweise - wie an sich bekannt - über ein entsprechendes Auswertegerät der Wägeeinrichtung 18 geschaffen werden, wodurch diese Steuerung auch in eine Gesamtsteuerung dieser Anlage oder einer übergeordneten Anlage einbezogen werden kann.

Was die Ausbildung und Anordnung des- Druckbehälters 1 anbelangt, so sind an dessen oberen Teil 1b außer der Druckgas-Versorgungsleitung 17 in sinnvoller Weise noch eine mit einem Absperrventil 21 versehene Druckentspannungsleitung 22 sowie eine durch ein Einlaufventil 23 verschließbare Fülleinrichtung 24 angeschlossen, die beispielsweise durch einen Trichter, einen Vorratsbehälter oder dergleichen gebildet sein kann und zum Zuführen von Zusatzstoff in den Druckbehälter 1 dient.

In Fig.1 ist ferner gestrichelt angedeutet, wie die Baueinheit mit Druckbehälter 1, Dosierschnecke 5, Druckgasverteiler 10 und Gaszuführende 2a über die Förderrohrleitung 2 an eine Hauptförderrohrleitung 19 einer Hauptentschwefelungsmittel zur Einblaslanze 3 fördernden Gesamtentschwefelungsanlage angeschlossen sein kann. Diese Gesamtentschwefelungsanlage enthält dementsprechend noch zumindest einen Hauptdruckbehälter 20 für ein Hauptentschwefelungsmittel und ggf. noch wenigstens einen weiteren Druckbehälter 21 für ein anderes Entschwefelungsmittel. Somit kann die zuvor beschriebene Anlage zum Fördern und Einblasen relativ kleiner Zusatzstoffmengen noch in besonders vorteilhafter Weise - zur Schaffung einer Koinjektion - mit einer vorhandenen oder neu zu installierenden Förder- und Einblasanlage einer Gesamtentschwefelungsanlage kombiniert werden.

Während nach der Schemadarstellung in Fig.1 die erfindungsgemäße Anlage zum Fördern und Einblasen kleiner Zusatzstoffmengen nur mit einer Baueinheit aus Druckbehälter 1, Dosierschnecke 5, Druckgasverteiler 10 und Gutzuführende 2a der Förderleitung 2 und somit zum pneumatischen Fördern nur eines einzigen Zusatzstoffes ausgebildet ist, bestehen auch verschiedene Möglichkeiten, diese Anlage mit mehreren solcher Baueinheiten und somit zum Fördern mehrerer verschiedener Zusatzstoffe auszubilden. Beispiele dafür sind in den Fig.3 und 4 bei stark vereinfachter Schemadarstellung veranschau-. licht.

Nach dem Ausführungsbeispiel gemäß Fig.3 enthält die erfindungsgemäße Anlage drei - fördertechnisch gesehen - in Reihe hintereinander angeordnete Baueinheiten bzw. Druckgasfördereinheiten I, II und III, die in der oben geschilderten Weise je einen Druckbehälter 1, 1', 1'' mit Dosierschnecke 5, 5', 5'', eine Förderrohrleitung 2, 2', 2'' und einen Druckgasverteiler 10, 10', 10'' enthalten. Diese Druckgasfördereinheiten I, II, III können in der oben geschilderten Weise für gleiche oder unterschiedliche Förderleistungen ausgeführt sein und unabhängig voneinander betrieben werden, wobei sie auf eine gemeinsame Hauptförderleitung 25 arbeiten.

Im weiteren Ausführungsbeispiel gemäß Fig.4 sei angenommen, daß dort zunächst wiederum drei Druckgasfördereinheiten I, II und III der genannten Art vorgesehen sind. In diesem Beispiel sind diese Druckgasfördereinheiten I, II, III jedoch parallel zueinander angeordnet, jedoch wiederum für gleiche oder unterschiedliche Förderleistungen ausgeführt und unabhängig voneinander betreibbar. Diese drei Druckgasfördereinheiten I, II und III arbeiten über ihre Förderrohrleitungen 2, 2', 2'' dann in entsprechender Weise parallel zueinander in eine Hauptförderleitung 25.

Die Hauptförderleitungen 25 nach den Beispielen gemäß Fig.3 und 4 können des weiteren in der weiter oben beschriebenen Weise an eine Gesamtentschwefelungsanlage angeschlossen sein.

## Patentansprüche

1. Anlage zum pneumatischen Einblasen einer dosierten Menge wenigstens eines im wesentlichen trockenen und pulverförmigen Zusatzstoffes in eine Metallschmelze, mit wenigstens einem mit Druckgas beaufschlagbaren Druckbehälter (1) zur Aufnahme und Abgabe des Zusatzstoffes sowie mit wenigstens einer Förderrohrleitung (2) zum pneumatischen Transport des Zusatzstoffes zu wenigstens einer Einblaslanze (3) an einem die Metallschmelze enthaltenden Behälter (4), wobei ein an eine Druckgasquelle (13) angeschlossener Druckgasverteiler (10) für eine gemeinsame, gleichzeitige Druckgaszuführung mit dem Druckbehälter (1) und der Förderrohrleitung (2) derart verbunden ist, dass im Förderbetrieb zwischen dem Druckbehälter (1) und dem Gutzuführende (2a) der Förderrohrleitung (2) ein konstanter Differenzdruck hergestellt ist,
**dadurch gekennzeichnet, dass**
a) am unteren Teil (1a) des Druckbehälters (1) ein regelbares, kombiniertes mechanisches Austrags- und Dosierorgan (5) angeordnet ist, das mit einem inneren ersten Földerabschnitt (5a) in den unteren Druckbehälterteil (1a) hineinragt und mit einem äußeren zweiten Förderabschnitt (5b) im Bereich über dem Gutzuführende (2a) der Förderrohrleitung (2) ausmundet und
b) dem Mündungsende (5c) des äußeren zweiten Förderabschnittes (5b) des Austrags- und Dosierorgans (5) ein schlagartig wirkendes Absperrventil (8) zugeordnet ist

2. Anlage nach Anspruch 1, **dadurch gekennzeichnet, dass** das kombinierte mechanische Austrags- und Dosierorgan durch eine Dosierschnecke (5) mit einem Schneckenförderelement (6) gebildet ist, das im Bereich des inneren ersten Förderabschnittes (5a) den inneren Querschnitt des unteren Druckbehälterteiles (1a) im wesentlichen frei durchsetzt und das durch eine in ihrer Drehzahl regelbare Antriebseinrichtung (7) antreibbar ist, wobei der äußere zweite Förderabschnitt (5b) dieser Dosierschnecke (5) ein rohrförmiges Schneckengehäuse (5b) aufweist, das den Druckbehälter (1) druckdicht mit dem Druckgasverteiler (10) verbindet.

3. Anlage nach Anspruch 2, **dadurch gekennzeichnet, dass** der Druckgasverteiler (10) ein vertikal ausgerichtetes Verteilergehäuse (14) aufweist, an dessen unteres Ende (14a) einerseits über ein Übergangsstück (15) das Gutzuführende (2a) der Förderrohrleitung (2) und andererseits der äußere zweite Förderabschnitt (5b) der Dosierschnecke (5) angeschlossen ist, während der obere Teil (14b) dieses Verteilergehäuses einerseits über eine mit einem Durchflussregelventil (11) versehene Druckgas-Zuführleitung (12) mit einer Druckgasquelle (13) und andererseits über eine mit einem Absperrventil (16) versehene Druckgas-Versorgungsleitung (17) mit dem oberen Teil (1b) des Druckbehälters (1) in Verbindung steht.

4. Anlage nach Anspruch 1, **dadurch gekennzeichnet, dass** der (jeder) Druckbehälter (1) mit einer Wägeeinrichtung (18) zur gravimetrischen Steuerung der Zusatzstoffabgabe ausgerüstet ist

5. Anlage nach Anspruch 7, **dadurch gekennzeichnet, dass** an den oberen Teil (1b) des Druckbehälters (1) außer einer Druckgas-Versorgungsleitung (17) eine mit einem Absperrventil (21) versehene Druckentspannungsleitung (22) sowie eine durch ein Einlaufventil (23) verschließbare Befülleinrichtung (24) für Zusatzstoffe angeschlossen sind.

6. Anlage nach Anspruch 1, **dadurch gekennzeichnet, dass** der (jeder) Druckbehälter (1) über die Förderrohrleitung (2) direkt mit der Einblaslanze (3) am Schmelzebehälter (4) verbunden ist.

7. Anlage nach Anspruch 1, **dadurch gekennzeichnet, dass** der (jeder) Druckbehälter (1) über die Förderrohrleitung (2) an eine Hauptförderrohrleitung (19) einer Hauptentschwefelungsmittel zur Einblaslanze (3) fördernden Gesamtentschwefelungsanlage angeschlossen ist.

8. Anlage nach Anspruch 6 oder 7, **dadurch gekennzeichnet, dass** mehrere, je einen Druckbehälter (1, 1', 1") mit Austrags- und Dosierorgan (5,5',5"), eine Förderrohrleitung (2, 2', 2") und einen Druckgasverteiler (10, 10', 10") enthaltende Druckgasfördereinheiten (I, II, III) vorgesehen sind, die in Reihe oder parallel zueinander angeordnet, für gleiche oder unterschiedliche Förderleistungen ausgeführt und unabhängig voneinander betreibbar sind.

## Claims

1. System for pneumatically injecting a metered quantity of at least one substantially dry and powdered additive into a metal melt, having at least one pressure vessel (1), which can be acted upon with pressurised gas, for receiving and supplying the additive, and having at least one conveying pipeline (2) for pneumatically transporting the additive to at least one injection lance (3) on a container (4) which contains the metal melt, a pressurised gas distributor (10), which is connected to a pressurised gas source (13), being connected, for a common, simultaneous supply of pressurised gas, to the pressure vessel (1) and the conveying pipeline (2) in such a manner that a constant differential pressure is produced during the conveying operation between the pressure vessel (1) and the product supply end (2a) of the conveying pipeline (2),
**characterised in that**
a) a controllable combined mechanical discharge and metering device (5) is arranged at the lower portion (1a) of the pressure vessel (1), which device (5) projects into the lower portion (1a) of the pressure vessel with an internal first conveying portion (5a) and opens out in the region above the product supply end (2a) of the conveying pipeline (2) with an external second conveying portion (5b) and
b) an abruptly functioning stop valve (8) is associated with the mouth end (5c) of the external second conveying portion (5b) of the discharge and metering device (5).

2. System according to claim 1, **characterised in that** the combined mechanical discharge and metering device is formed by a metering screw (5) having a screw-like conveying element (6) which extends substantially freely through the internal cross-section of the lower portion (1a) of the pressure vessel in the region of the internal first conveying portion (5a) and which can be driven by a driving device (7) whose speed is controllable, the external second conveying portion (5b) of this metering screw (5) having a tubular screw housing (5b) which connects the pressure vessel (1) to the pressurised gas distributor (10) in a pressure-tight manner.

3. System according to claim 2, **characterised in that** the pressurised gas distributor (10) has a vertically aligned distributor housing (14), to whose lower end (14a) are connected, at one side, the product supply end (2a) of the conveying pipeline (2) via a transition piece (15) and, at the other side, the external second conveying portion (5b) of the metering screw (5), whereas the upper portion (14b) of this distributor housing is connected, at one side, to a pressurised gas source (13) via a pressurised gas supply line (12) which is provided with a flow control valve (11) and, at the other side, to the upper portion (1b) of the pressure vessel (1) via a pressurised gas supply line (17) provided with a stop valve (16).

4. System according to claim 1, **characterised in that** the (each) pressure vessel (1) is equipped with a balancing device (18) for gravimetrically controlling the additive supply.

5. System according to claim 1, **characterised in that**, in addition to a pressurised gas supply line (17), a pressure relief line (22), which is provided with a stop valve (21), and a filling device (24) for additives, which device (24) can be closed by an inlet valve (23), are connected to the upper portion (1b) of the pressure vessel (1).

6. System according to claim 1, **characterised in that** the (each) pressure vessel (1) is connected directly to the injection lance (3) on the melt container (4) by means of the conveying pipeline (2).

7. System according to claim 1, **characterised in that** the (each) pressure vessel (1) is connected by means of the conveying pipeline (2) to a main conveying pipeline (19) of an overall desulphurising system which conveys main desulphurising agent to the injection lance (3).

8. System according to claim 6 or 7, **characterised in that** there are provided a plurality of pressurised gas conveying units (I, II, III) which each contain a pressure vessel (1, 1', 1") having a discharge and metering device (5, 5', 5"), a conveying pipeline (2, 2', 2") and a pressurised gas distributor (10, 10', 10") and which are arranged in series or in parallel relative to each other, are configured for the same or different conveying outputs and can be operated independently of each other.

## Revendications

1. Installation pour l'injection pneumatique d'une quantité dosée d'au moins un additif essentiellement sec et pulvérulent dans un métal en fusion, avec au moins un vase de pression (1) pouvant admettre un gaz sous pression, pour l'admission et le dégagement de l'additif, ainsi qu'avec au moins une conduite d'accélération (2) pour le transport pneumatique de l'additif vers au moins une lance d'injection (3) vers un récipient (4) contenant le métal en fusion, dans lequel un répartisseur de gaz sous pression (10) raccordé à une source de gaz sous pression (13) est relié, pour une amenée de gaz sous pression simultanée, commune au vase de pression (1) et à la conduite d'accélération (2), de sorte que en fonctionnement, entre le vase de pression (1) et l'alimenteur de matière (2a) de la conduite d'accélération, est réglée une pression différentielle constante, **caractérisé en ce que**
a) sur la partie inférieure (1a) du vase de pression (1) est disposée un organe d'extraction et de dosage (5) mécanique combiné, réglable, qui dépasse par une première section interne d'accélération (5a) dans la partie inférieure du vase de pression (1a) et avec une deuxième section externe d'accélération (5b), débouche par l'alimenteur de matière (2a) de la conduite d'accélération (2), et
b) l'embouchure (5c) de la deuxième section externe d'accélération (5b) de l'organe d'extraction et de dosage (5), est équipée d'une soupape d'arrêt (8) agissant de manière instantanée.

2. Installation suivant la revendication 1, **caractérisé en ce que** l'organe d'extraction et de dosage mécanique combiné, est formé d'une vis de dosage (5) avec un élément d'accélération de vis (6), qui traverse essentiellement librement dans la zone de la première section interne d'accélération (5a) la section interne de la partie inférieure du vase de pression (1a) et qui peut être actionné par un dispositif de fonctionnement (7) réglable au niveau de leur nombre de tour, où la deuxième section externe d'accélération (5b) de cette vis de dosage (5) présente un boîtier de vis tubulaire (5b), qui relie le vase de pression (1) de manière étanche, avec le répartisseur de gaz sous pression (10).

3. Installation suivant la revendication 1, **caractérisé en ce que** le répartisseur (10) présente un boîtier de répartition (14) orienté verticalement, l'extrémité inférieure (14a) duquel étant adapté d'une part par un raccord de rétrécissement (15) à l'alimenteur de matière (2a) de la conduite d'accélération (2) et d'autre part, à la deuxième section externe d'accélération (5b) de la vis de dosage (5), alors que la partie supérieure (14b) de ce boîtier de répartition est en connexion d'une part, par une conduite d'amenée de gaz sous pression (12) munie d'une soupape de régulation du gaz sous pression (11), à une source de gaz sous pression (13) et d'autre part, par une conduite d'alimentation de gaz sous pression (17) muni d'une soupape d'arrêt (16) avec une partie supérieure (1b) du vase de pression (1).

4. Installation suivant la revendication 1, **caractérisé en ce que** le (chaque) vase de pression (1) est équipé d'un dispositif de pesée (18) pour le réglage gravimétrique de l'apport d'additif.

5. Installation suivant la revendication 1, **caractérisé en ce que** sur la partie supérieure (1b) du vase de pression (1), est adapté en plus d'une conduite d'alimentation de gaz sous pression (17), une conduite de détente de pression (22) munie d'une soupape d'arrêt (21), ainsi qu'un dispositif de remplissage (24) fermable par une vanne d'entrée (23) pour l'additif.

6. Installation suivant la revendication 1, **caractérisé en ce que** le (chaque) vase de pression (1) est relié par la conduite d'accélération (2), directement à la lance d'injection (3) du récipient de masse en fusion (4).

7. Installation suivant la revendication 1, **caractérisé en ce que** le (chaque) vase de pression (1) est adapté par la conduite d'accélération (2), sur une conduite principale (19) d'un agent principal de désulfuration pour installation de désulfuration globale accélérant vers la lance d'injection (3).

8. Installation suivant la revendication 6 ou 7, **caractérisé en ce que** plusieurs unités d'accélération par gaz sous pression (I, II et III) sont prévues, contenant par vase de pression (1, 1', 1'') avec organe d'extraction et de dosage (5, 5', 5''), une conduite d'accélération (2, 2', 2'') et un répartisseur de gaz sous pression (10, 10', 10''), qui sont disposées en série ou en parallèle, pour réaliser des conduites d'accélération similaires ou différentes et peuvent être mises en fonctionnement indépendamment l'une de l'autre.
